# EUROPÄISCHE PATENTSCHRIFT

(11) **EP 1 834 860 B1**
(45) Veröffentlichungstag und Bekanntmachung des Hinweises auf die Patenterteilung: **25.06.2008**
(21) Anmeldenummer: 07001586.2
(22) Anmeldetag: 25.01.2007
(51) Int. Cl.: B62D 3/12

(54) **Druckstückeinheit für ein Lenkgetriebe**
Yoke for a steering gear
Poussoir pour un mécanisme de direction

(30) Priorität: 16.03.2006 DE 102006012566
(43) Veröffentlichungstag der Anmeldung: 19.09.2007
(73) Patentinhaber: ThyssenKrupp Presta SteerTec GmbH, 40476 Düsseldorf (DE)
(72) Erfinder: Genal, Edwin, 70188 Stuttgart (DE)
(74) Vertreter: Lenzing, Andreas

(56) Entgegenhaltungen:
- EP-A1- 1 084 933
- DE-A1-1102004 024 05
- JP-A- 2004 237 917
- US-A1- 2002 124 670

## Beschreibung

Die vorliegende Erfindung betrifft eine Druckstückeinheit für ein Lenkgetriebe nach dem Oberbegriff des Anspruchs 1.

Bei der Gestaltung von Druckstücken zur Kraftbeaufschlagung von Zahnstangen von Lenkgetrieben besteht grundsätzlich die Problematik der Geräuschentwicklung, die durch notwendig vorhandenes Spiel zwischen dem Druckstück und der Wandung eines das Druckstück führenden Gehäuses bedingt ist.

JP 2004 237917 beschreibt ein Druckstück ein Lenkgetriebe gemäß dem Oberbegriff des Anspruchs 1

EP 1 084 933 A1 beschreibt ein Druckstück für ein Lenkgetriebe, bei dem ein O-Ring in einer exzentrischen Ringnut des Druckstücks angeordnet ist, so dass das Druckstück in einseitiger Anlage an die Wand seiner Führungsbohrung angedrückt ist.

Es ist die Aufgabe der Erfindung, ein Druckstück für ein Lenkgetriebe anzugeben, bei dem eine durch Bewegungsspiel des Druckstücks bedingte Geräuschentwicklung verringert ist.

Diese Aufgabe wird für eine eingangs genannte Druckstückeinheit erfindungsgemäß mit den kennzeichnenden Merkmalen des Anspruchs 1 gelöst. Durch die geneigte Ebene, in der das Stützmittel in der Umfangsrichtung veräuft, wird letztlich ein resultierendes Drehmoment oder Kippmoment senkrecht zur Bewegungsrichtung des Druckstücks Bewegungsrichtung bewirkt. Hierdurch erfolgt eine definierte Anlage des Druckstücks an der Wandung des Druckstückgehäuses, wodurch ein spielbedingtes Klappern des Druckstücks während des Betriebs zumindest erheblich reduziert ist. Zudem ist die Anlagefläche des Druckstücks an der Wandung des Druckstückgehäuses klein, so dass nur geringe Reibung und somit Bremswirkung in Bewegungsrichtung des Druckstücks auftritt.

In zweckmäßiger bevorzugter Ausgestaltung ist das Stützmittel als ein geschlossener oder offener O-Ring ausgebildet. Dies ermöglicht eine einfache und kostengünstige Herstellung.

Zum Zweck der wohldefinierten Positionierung des Stützmittels und zur einfachen Herstellung ist das Stützmittel in einer Nut gehalten, die in die Außenfläche des Druckstücks eingebracht ist. Grundsätzlich kann das Stützmittel auch durch andere Maßnahmen gehalten sein. Insbesondere kann das Stützmittel auch in einer Nut an der Innenwandung des Druckstückgehäuses gehalten sein. Im Interesse einer einfachen Fertigung und guten Wirkung weist die Nut dabei eine im wesentlichen konstante Tiefe auf. Insbesondere bevorzugt ist vorgesehen, dass das Stützmittel das Druckstück im wesentlichen vollständig umläuft, um eine optimale Abstützung des Druckstücks zu gewährleisten.

In besonders bevorzugter Ausführung ist zur Erlangung eines ausreichenden Moments zur Überbrückung des Spiels zwischen Druckstück und Druckstückgehäuse vorgesehen, dass eine maximale Neigung Ebene des Stützmittels wenigstens ein Fünftel, besonders bevorzugt wenigstens die Hälfte einer geführten Höhe des Druckstücks beträgt.

In weiterhin vorteilhafter Ausführung ist es vorgesehen, dass eine Achse des Druckstückgehäuses nicht senkrecht zu einer Längsachse einer Zahnstange des Lenkgetriebes ausgerichtet ist. Hierdurch lässt sich eine weitere Vorspannkraft in einer radialen Richtung des Druckstücks erzielen, da das Druckstück aufgrund der winkeligen Ausrichtung eine Kraftkomponente in Bewegungsrichtung der Zahnstange erfährt.

Weitere Vorteile und Merkmale der Erfindung ergeben sich aus dem nachfolgend beschriebenen Ausführungsbeispiel sowie aus den abhängigen Ansprüchen.

Nachfolgend wird ein bevorzugtes Ausführungsbeispiel einer erfindungsgemäßen Druckstückeinheit beschrieben und anhand der anliegenden Zeichnungen näher erläutert.

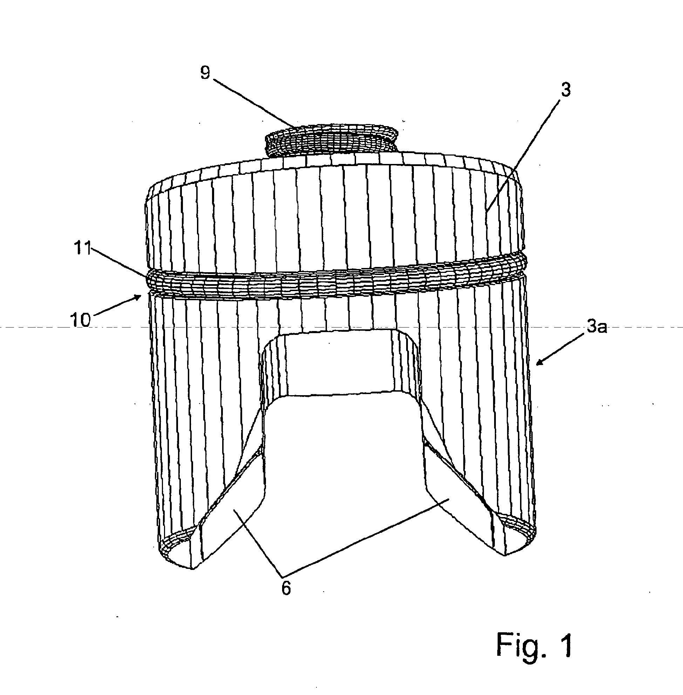

- Fig. 1: zeigt eine räumliche Ansicht eines Druckstücks einer erfindungsgemäßen Druckstückeinheit.
- Fig. 2: zeigt eine Schnittansicht durch einen Teil eines Lenkgetriebes mit einer erfindungsgemäßen Druckstückeinheit.

Die bevorzugte Druckstückeinheit umfasst ein Gehäuse 1 eines Lenkgetriebes eines Kraftfahrzeugs, in dem eine zylindrische Führungswandung 2 zur Führung eines Druckstücks 3 ausgebildet ist. Die Führungswandung 2 bildet zusammen mit einem Aufnahmebereich 4 für ein Bodenstück 5 ein Druckstückgehäuse aus. Das Druckstück 3 ist als im wesentlichen zylindrischer Körper ausgebildet, der in der Gehäusewandung 2 geführt und in Richtung einer Druckstückachse A bewegbar ist. Mittels aus geeignetem Kunststoff bestehender Wirkflächen 6 übt das Druckstück 3 auf an sich bekannte Weise eine Kraft auf eine Zahnstange 7 des Lenkgetriebes aus, wodurch die Zahnstange 7 gegen ein Ritzel 8 gedrückt wird, das mit der Zahnstange 7 kämmt. Hierzu ist das Druckstück über eine vorgespannte Feder 9 gegen den Boden 5 abgestützt.

Zwischen dem Druckstück 3 und der Gehäusewandung 2 verbleibt grundsätzlich ein radiales Spiel, um eine Beweglichkeit des Druckstücks 3 zu gewährleisten.

In einer Außenfläche 3a des Druckstücks 3 ist eine Nut 10 eingebracht, die im vorliegenden Beispiel das Druckstück 3 vollständig, also um 360 Grad, umläuft. In die Nut 10 ist ein als elastischer O-Ring ausgebildetes Stützmittel 11 eingelegt. Im nicht eingebauten Zustand des Druckstücks 3 ragt das Stützmittel 11 an jeder Stelle radial über die Außenfläche 3a des Druckstücks 3 hinaus. Bei Einbau des Druckstücks 3 in die Führung 2 wird das elastische Stützmittel 11 zumindest abschnittsweise radial etwas eingedrückt.

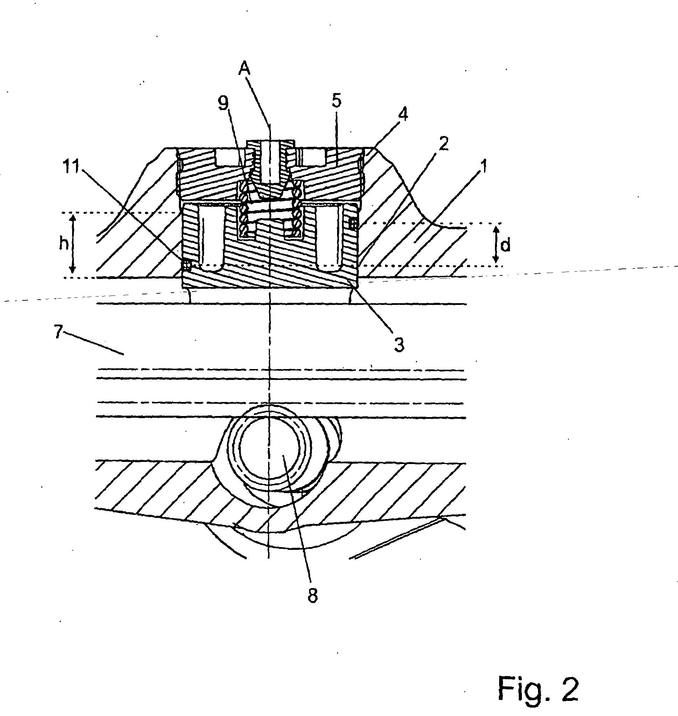

Vorliegend verlaufen Nut 10 und Stützmittel 11 nicht auf konstanter Höhe, sondern in einer zu der Druckstückachse A geneigten Ebene. Wie insbesondere die Schnittansicht gemäß Fig. 2 verdeutlicht, ändert somit das Stützmittel über seinen Verlauf in Umfangsrichtung des Druckstücks 3 seine axiale Höhe.

Als eine geführte Höhe h des Druckstücks 3 ist im vorliegenden Beispiel die axiale Höhe der Führungswandung 2 anzusehen, da deren Höhe kleiner ist als die Gesamthöhe des Druckstücks 3. Die Schnittebene nach Fig. 2 ist so ausgerichtet, dass sie das Stützmittel in der Ebene seiner maximalen axialen Höhenänderung d durchschneidet. Diese Ebene ist zugleich die Ebene, in der die Bewegungsrichtung der Zahnstange 7 verläuft. Aus der im wesentlichen maßstabsgerechten Zeichnung nach Fig. 2 ergibt sich daher, dass die maximale Höhenänderung des Stützmittels 11 sich zu der geführten Höhe des Druckstücks 3 im Verhältnis von etwa 5:8 verhält.

Es versteht sich, dass der Verlauf des Stützmittels 11 und/oder der Nut 10 nicht notwendig in einer Ebene liegen muss. Es kann sich auch um einen welligen, spiraligen oder anderen Verlauf handeln.

## Patentansprüche

1. Druckstückeinheit für ein Lenkgetriebe, umfassend
ein Druckstückgehäuse (2),
ein in dem Druckstückgehäuse (2) verschiebbar aufgenommenes Druckstück (3) mit einer im wesentlichen zylindrischen Außenfläche (3a), und
ein im Bereich der zylindrischen Außenfläche (3a) angeordnetes längliches Stützmittel (11) aus einem elastischen Material, wobei das Stützmittel (11) die Außenfläche (3a) in einer Umfangsrichtung über einen Winkelbereich von mehr als 180° umläuft,
**dadurch gekennzeichnet,**
**dass** das Stützmittel (11) über den Verlauf in der Umfangsrichtung in einer zu der Druckstückachse (A) geneigten Ebene verläuft.

2. Druckstückeinheit nach Anspruch 1, **dadurch gekennzeichnet, dass** das Stützmittel (11) als ein geschlossener oder offener O-Ring ausgebildet ist.

3. Druckstückeinheit nach einem der vorhergehenden Ansprüche, **dadurch gekennzeichnet, dass** das Stützmittel (11) in einer Nut (10) gehalten ist, die in die Außenfläche (3a) des Druckstücks eingebracht ist.

4. Druckstückeinheit nach Anspruch 3, **dadurch gekennzeichnet, dass** die Nut (10) eine im wesentlichen konstante Tiefe aufweist.

5. Druckstückeinheit nach einem der Ansprüche 3 oder 4, **dadurch gekennzeichnet, dass** das Stützmittel (11) das Druckstück (3) im wesentlichen vollständig umläuft.

6. Druckstückeinheit nach einem der vorhergehenden Ansprüche, **dadurch gekennzeichnet, dass** eine maximale Neigung (d) der Ebene des Stützmittels (11) wenigstens ein Fünftel einer geführten Höhe (h) des Druckstücks (3) beträgt.

7. Druckstückeinheit nach Anspruch 6, **dadurch gekennzeichnet, dass** die maximale Neigung (d) der Ebene des Stützmittels (11) wenigstens die Hälfte der geführten Höhe (h) des Druckstücks (3) beträgt.

8. Druckstückeinheit nach einem der vorhergehenden Ansprüche, **dadurch gekennzeichnet, dass** eine Achse (A) des Druckstückgehäuses (2) nicht senkrecht zu einer Längsachse einer Zahnstange (7) des Lenkgetriebes ausgerichtet ist.

## Claims

1. Yoke unit for a steering gear, comprising
a yoke housing (2),
a yoke (3) held adjustably in the yoke housing (2) with an essentially cylindrical exterior surface (3a) and
an oblong supporting means (11) consisting of a flexible material, arranged in the vicinity of the cylindrical exterior surface (3a), wherein the supporting means (11) rotates about the exterior surface (3a) in a circumferential direction over an angle range of more than 180°,
**characterized in that**
the supporting means (11) in the circumferential direction runs in a plane, which is inclined to the yoke axis (A).

2. Yoke unit according to Claim 1, **characterized in that** the supporting means (11) is in the form of a closed or open O-ring.

3. Yoke unit according to any one of the preceding claims, **characterized in that** the supporting means (11) is held in a groove (10), which is formed in the exterior surface (3a) of the yoke.

4. Yoke unit according to Claim 3, **characterized in that** the groove (10) has an essentially constant depth.

5. Yoke unit according to either of Claims 3 and 4, **characterized in that** the supporting means (11) rotates about the yoke (3) essentially completely.

6. Yoke unit according to any one of the preceding claims, **characterized in that** a maximum inclination (d) of the plane of the supporting means (11) amounts to at least one fifth of a guided height (h) of the yoke (3).

7. Yoke unit according to Claim 6, **characterized in that** the maximum inclination (d) of the plane of the supporting means (11) amounts to at least half the guided height (h) of the yoke (3).

8. Yoke unit according to any one of the preceding claims, **characterized in that** an axis (A) of the yoke housing (2) is not perpendicularly aligned to a longitudinal axis of a toothed rod (7) of the steering gear.

## Revendications

1. Unité à poussoir pour un mécanisme de direction, comprenant
un boîtier de poussoir (2),
un poussoir (3) reçu en translation dans le boîtier de poussoir (2), avec une surface extérieure (3a) essentiellement cylindrique, et
un organe de soutien oblong (11) agencé dans la région de la surface extérieure cylindrique (3a), en matériau élastique, ledit organe de soutien (11) entourant la surface extérieure (3a) dans une direction périphérique sur une plage angulaire de plus de 180°,
**caractérisée en ce que**
l'organe de soutien (11) s'étend sur son tracé en direction périphérique dans un plan incliné par rapport à l'axe (A) du poussoir.

2. Unité à poussoir selon la revendication 1, **caractérisée en ce que** l'organe de soutien (11) est réalisé sous forme de bague torique fermée ou ouverte.

3. Unité à poussoir selon l'une des revendications précédentes, **caractérisée en ce que** l'organe de soutien (11) est tenu dans une gorge (10) qui est ménagée dans la surface extérieure (3a) du poussoir.

4. Unité à poussoir selon la revendication 3, **caractérisée en ce que** la gorge (10) présente une profondeur essentiellement constante.

5. Unité à poussoir selon l'une des revendications 3 ou 4, **caractérisée en ce que** l'organe de soutien (11) entoure essentiellement complètement le poussoir (3).

6. Unité à poussoir selon l'une des revendications précédentes, **caractérisée en ce qu'**une inclinaison maximale (d) du plan de l'organe de soutien (11) s'élève au moins à un cinquième d'une hauteur guidée (h) du poussoir (3).

7. Unité à poussoir selon la revendication 6, **caractérisée en ce que** l'inclinaison maximale (d) du plan de l'organe de soutien (11) s'élève à au moins la moitié de la hauteur guidée (h) du poussoir (3).

8. Unité à poussoir selon l'une des revendications précédentes, **caractérisée en ce qu'**un axe (A) du boîtier (2) du poussoir n'est pas orienté perpendiculairement à un axe longitudinal d'une crémaillère (7) du mécanisme de direction.
